# EUROPEAN PATENT APPLICATION

(11) **EP 1 148 450 A2**
(43) Date of publication of application: **24.10.2001**
(21) Application number: 01201250.6
(22) Date of filing: 03.04.2001
(51) Int. Cl.: G07F 15/00, G07F 7/02

(54) **Improvements in or relating to metering**

(30) Priority: 03.04.2000 GB 0008045
(71) Applicant: Siemens Metering Limited, Telford, Shropshire TF1 4ET (GB)
(72) Inventor: Pollock, Martin Robert, Shrewsbury SY3 9AU (GB)
(74) Representative: Humphrey-Evans, Edward John

(57) **Abstract**

Described herein is a Pay-As-You-Go system for supplying a commodity, for example, electricity, to a consumer. The consumer may purchase his electricity from a point-of-sale unit (40) and may select a transaction-specific electricity supplier from a plurality of electricity suppliers at the time of purchase using a data entry unit (42) associated with the point-of-sale unit (40). This provides the consumer with freedom to purchase electricity from any one of the electricity suppliers in the system at any time. As a result of the consumer's purchase, a token (66) is issued which is communicated to retail service provider (46) by communication means (48) and which is input to an input device (72) associated with his meter (20) which determines the amount of electricity to be credited to the meter (20) to allow continued connection between the mains supply (22) and the consumer's supply (24).

## Description

The present invention relates to improvements in metering, such as the metering of utility services.

There are many Pay-As-You-Go (PAYG) payment systems in use today in which a consumer pays for the energy prior to consumption. In general, these systems involve the making of purchase decisions by the consumer rather than a retrospective billing from the supplier of the energy. PAYG systems may also be used with other commodity supplies, such as water supply.

In many implementations of PAYG systems, the consumer is issued with a special ID card or token which is presented at a suitably-equipped retail outlet and 'credit' is sold to the consumer in the form of the issuance of a special code corresponding to the amount of 'credit'. Typically, the code is encrypted on a separate special 'token', for example, pre-encoded magnetic stripe value tokens or the code is written by a special machine to the consumer's ID card itself, the ID card comprising a 'smart' card to which the code is written.

If the 'token' is in the form of a magnetic stripe value token, it is inserted into a slot provided at the consumer's premises which is connected to the energy meter, the slot being associated with a card reading system which decodes the information on the magnetic stripe and 'credits' the consumer with the amount of energy purchased. Similarly, if the code is entered on to the consumer's ID card, the card is inserted into a card reading system for decoding and for crediting the consumer with the amount of energy purchased.

As an alternative to the code representing the amount of 'credit' purchased being provided on a 'token' or 'smart' card as described above, the code may be issued as a printed string of numbers on a consumer receipt. The consumer enters the string of numbers into the energy meter by means of a keypad and the numbers are decoded to 'credit' the consumer with the amount of energy purchased.

In another alternative, the code can be transmitted directly to the consumer's premises by an appropriate communications network and the meter is 'credited' with the amount of energy purchased.

It is common to refer to PAYG in terms of the issue of a 'token', which may be a physical use-once card, a message on another re-usable card, a printed character string, or a communicated code. In general, the consumer first identifies himself to the retailer and then a special token is issued.

However, in some PAYG systems, it is not necessary for the consumer to identify himself. Anybody can buy any number, or value, of tokens and use them in any meters. This is not normally preferred by utility companies such as energy supply companies because the potential for fraud is very high due to the close correspondence between the function of the tokens, and that of cash in general.

PAYG systems have other characteristics. In particular, it is normal for the provider of the retailing service, that is, the person from which the 'token' is purchased, to be acting under contract from the provider of the special meter fitted in the consumer's home which is capable of interpreting the issued tokens. Typically, an energy supplier contracts with the consumer to have a total special PAYG service provided. This includes the provision by the supplier of all necessary metering, retailing, special ID card and 'token' management. The energy supplier may sub-contract the actual delivery of these services, but nevertheless, retains an overall proprietorial responsibility for the system and for control thereof.

Difficulties arise when a consumer decides that he wishes to change his energy supplier, as is his light under the opening-up to competition of the public utility markets in certain countries. Assuming that the consumer wishes to continue to use a PAYG system, one problem is that the new energy supplier may not have his own retailing network in the physical neighbourhood of his new customer. Thus, the new energy supplier buys back service from the old energy supplier and the consumer sees no change in his energy provision service.

A second problem is that the new energy supplier may want to use a different system from the old energy supplier and this may involve provision of a new meter as well as new retailing facilities. The new energy supplier may be keen to do this in principle because it has a major influence on the visibility and success of his brand marketing, but he is prevented by the high cost of doing so.

A third problem is that the consumer has a right to change his energy supplier at very short notice, so there is little incentive for a new supplier to want to invest in extending his service network into new areas. This uncertainty exacerbates the general difficulty of lack of development of newer, better solutions for PAYG consumers, many of whom are on low incomes.

Commonly, card-based payment systems employ an issuer-ID field which enables retailers to identify the party who has proprietorial responsibility for the scheme being operated. This ID would normally refer to the energy supplier and would be used by the retailer to ensure that payments made by consumers were returned to the correct energy supply companies.

It will be appreciated that, each time a consumer changes his energy supplier a new ID card with a new issuer-ID field needs to be provided by the new energy supplier and steps have to be taken to invalidate the previous ID card issued by the old energy supplier.

It is therefore an object of the present invention to provide an improved PAYG system which overcomes the problems mentioned above.

In accordance with one aspect of the present invention, there is provided a Pay-As-You-Go system for supplying a commodity to a consumer from a plurality of commodity suppliers, the system comprising:-
selection means for selecting a transaction-specific commodity supplier;
purchasing means associated with the selection means and through which one or more tokens can be purchased from the transaction-specific commodity supplier, the purchasing means including means for recording data relating to the transaction-specific commodity supplier and the amount of the commodity purchased on each token and storing a record thereof;
a meter for connecting the consumer to the commodity; and
input means associated with the meter for inputting 'credit' thereto, the input means being capable of determining the amount of 'credit' from data on the token.

In accordance with another aspect of the invention, there is provided a method of supplying a commodity to a consumer from a plurality of commodity suppliers;
the method comprising:
enabling the selection of a transaction specific commodity supplier via selection means enabling the purchase of an amount of the commodity via purchasing means associated with the selection means whereby one or more tokens are purchased from the transaction-specific commodity supplier, the purchasing means including means for recording data relating to the transaction-specific commodity supplier and the amount purchased, feeding tokens at input means associated with a meter whereby the meter is credited with an amount of commodity and metering the use of the credit such that an amount of commodity maybe dispensed relative to the value of credit.

For a better understanding of the present invention, reference will now be made, by way of example only, to the accompanying drawings in which:-
Figure 1 illustrates a known PAYG system; and
Figure 2 illustrates a PAYG system according to the present invention.

The present invention will be described with reference to a PAYG system for the supply of electricity, but it will be appreciated that such a system can also be used with other commodity suppliers/utility companies for commodities such as gas and water.

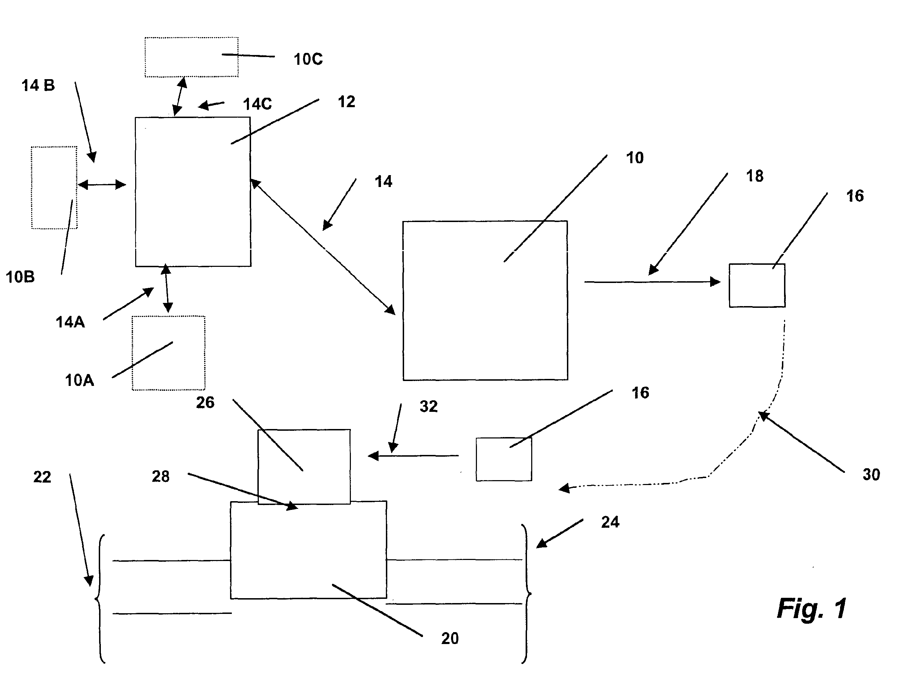

Referring initially to Figure 1, a point-of-sale unit 10 is shown which is connected to an electricity supplier 12 by means of a two-way communications link 14, the point-of-sale unit 10 being located in a retailing outlet (not shown). A consumer wishing to purchase electricity in a PAYG system visits his local retailing outlet in which the point-of-sale unit 10 is located for his particular electricity supplier 12. He presents his special ID card issued by his electricity supplier 12 and pays for an amount of electricity. The point-of-sale unit 10 issues a 'token' 16 as shown by arrow 18. In this particular case, the 'token' comprises a card having a magnetic stripe formed thereon in which the encrypted code is recorded. The encrypted code relates to the amount of electricity to be credited to the consumer's electricity meter and optionally to an issuer-ID field and other fields related to the particular electricity supplier 12. The issuer-ID field, if present, is determined by the consumer's own special ID card and is negotiable at the point-of-sale.

Naturally, other point-of-sale units 10A, 10B, 10C are also connected to the electricity supplier 12 via respective two-way communications links 14A, 14B, 14C. It will be appreciated that each point-of-sale unit 10, 10A, 10B, 10C will share the same unique issuer-ID field which will be included in the encrypted code. Although only four point-of-sale units 10, 10A, 10B, 10C are shown connected to the electricity supplier 12, it will readily be understood that this is by way of example and that any number of point-of-sale units can be connected to the electricity supplier. Also, a whole set of point-of-sale units may be operated by a specialist point-of-sale network service provider who operates them on behalf of the electricity supplier.

It will be appreciated that the term 'token' is intended to include tokens, cards or other means for receiving encrypted or plain-text data from the point-of-sale unit 10 for transfer to an electricity meter.

At the consumer's premises, an electricity meter 20 is connected to a mains supply 22 for supplying electricity to a consumer's supply 24. The meter 20 includes a switch (not shown) which is closed when there is 'credit' on the meter and is opened when the 'credit' is exhausted. In the PAYG system, the meter 20 has a card reading unit 26 for receiving the 'token' and reading the encrypted code thereon so as to provide the meter 20 with a 'credit' relating to an amount of electricity purchased at the point-of-sale unit 10. The card reading unit 26 is connected to the meter 20 by means of connection 28.

The consumer having purchased his 'token' 16, takes it to his premises as indicated by arrow 30 and then inserts it into the card reading unit 26 as shown by arrow 32. The card reading unit 26 decodes the encrypted data and credits the meter 20 with the amount contained within the code via connection 28.

As will readily be appreciated, the data arising from point-of-sale unit 10 is linked to a particular electricity supplier 12 whether or not the point-of-sale is operated by a specialist point-of-sale network service provider, and therefore for a consumer to change his electricity supplier, he will need to find another point-of-sale unit for the new electricity supplier which is compatible with the meter 20 and card reading unit 26 he has already at his premises. Alternatively, the new electricity supplier may replace the meter 20 and card reading unit 26 at the consumer's premises so that the consumer can use 'tokens' issued from a point-of-sale which is connected to the new electricity supplier.

It is known that some electricity suppliers sub-contract the operation of some point-of-sale services to specialist point-of-sale network service providers. Thus, the point-of-sale unit 10 may, under these circumstances, comprise a number of points-of-sale operated by one point-of-sale network service provider. The point-of-sale network service providers may also provide several different, competing services through the same point-of-sale equipment on behalf of several suppliers, but such services are operated independently of one another and there is no interaction between one system and another. Moreover, the point-of-sale network service provider is not the scheme proprietor and has no participation in the consumer's choice of supplier.

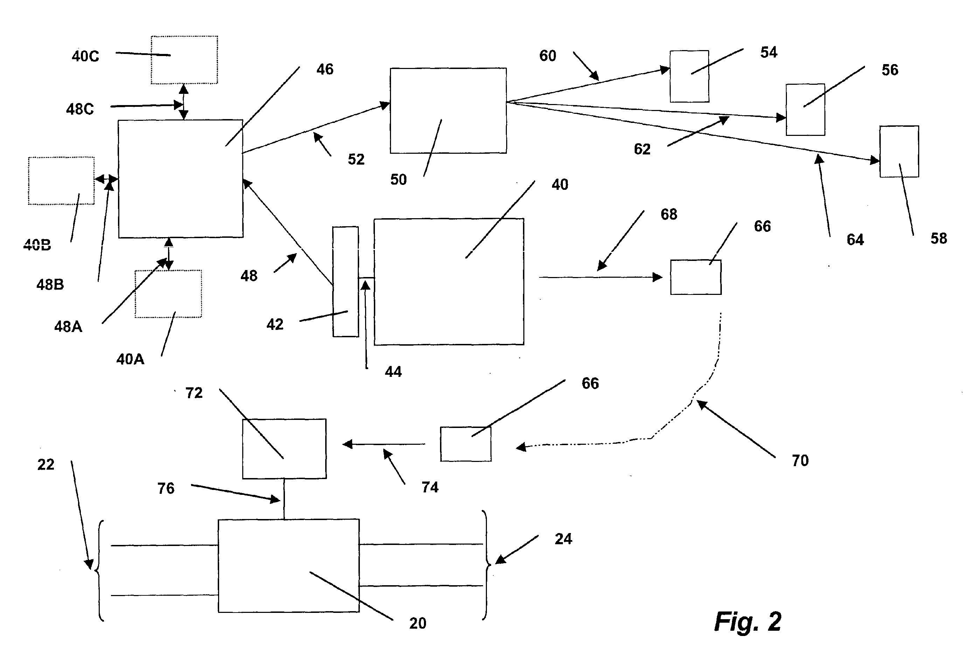

In accordance with the present invention, a new PAYG system is shown in Figure 2. Components already described with reference to Figure 1 are referenced the same. Here, a point-of-sale unit 40 is connected to a data entry unit 42 by means of a connection 44. Data entry unit 42 enables transaction-specific supplier ID to be selected as will be described in more detail later. The point-of-sale unit 40 is connected via data entry unit 42 to a retail service provider 46 via connection 48, the retail service provider 46 being responsible for the operation of other similar point-of-sale units 40A, 40B, 40C with associated data entry units (not shown) via respective connections 48A, 48B, 48C. Again, although only four point-of-sale units 40, 40A, 40B, 40C are shown, it will readily be understood that any number of such units may be connected to the retail service provided 46.

In the system according to the present invention, the retail service provider 46 is not equivalent to the electricity supplier 12 in Figure 1, but merely retails electricity on behalf of a group of electricity suppliers as will be described in more detail later.

The retail service provider 46 is connected to a central collection unit 50 via connection 52. The central collection unit 50 processes data received from the retail service provider 46 to provide data for respective ones of electricity suppliers 54, 56, 58 via connections 60, 62, 64 as shown.

As before, a consumer wishing to purchase electricity visits a retail outlet (not shown) which has a point-of-sale unit 40 located therein. However, in contrast to the PAYG system described with reference to Figure 1, the consumer is not limited to buying electricity from one particular electricity supplier. In this case, the consumer may choose whose electricity he wishes to purchase and this can be entered into the point-of-sale unit 40 using the data entry unit 42 associated therewith as a transaction-specific electricity supplier ID. The consumer is issued with a coded receipt 66, as shown by arrow 68, which includes encrypted data relating to the amount of electricity purchased for 'credit' to the consumer's electricity meter 20 and the transaction-specific electricity supplier ID from whom the amount of electricity has been purchased. The coded receipt 66 also includes data relating to the issuer-ID field, that is, data relating to the point-of-sale unit 40 where the electricity is purchased and/or the retail service provider 46. The coded receipt 66 is then transferred to the consumer's premises as shown by arrow 70 and used to update an input unit 72 associated with the meter 20 as shown by arrow 74. The input unit 72 decrypts the data stored on the coded receipt 66 and provides the meter 20 with data relating to the amount of electricity to be supplied from the transaction-specific electricity supplier via connection 66. The coded receipt data is also communicated via retail service provider 46 to central collection unit 50 by communication means 48 and 52.

The consumer's premises has an electricity meter 20 connected between the mains supply 22 and the consumer's supply 24 as before. However, in this case, the card reading unit 26 is replaced by the input unit 72 which is capable of reading the coded receipt 66.

It will readily be appreciated that the coded receipt 66 may be in the form of a magnetic stripe card, a 'smart' card or a virtual token as sent by radio, telephone or the internet, for example. In this case, the input unit 72 may comprise a card reader as described with reference to Figure 1.

Alternatively, the coded receipt 66 may be simply a piece of paper with a coded sequence printed thereon. In this case, the input unit 72 may comprise a data entry unit into which the coded sequence can be entered by the consumer.

In another embodiment of the coded receipt, a transmission may be sent from the point-of-sale unit 40 to the consumer's meter 20 - in this case, the input unit 72 may comprise a radio receiver for receiving the transmission from the point-of-sale unit 40 and arranging for an appropriate 'credit' to be applied to the meter 20.

As mentioned above, the retail service provider 46 provides a link between the point-of-sale 40 and the central collection unit 50. The retail service provider 46 receives data from the point-of-sale unit 40 and its associated data entry unit 42 relating to each transaction-specific electricity supplier ID and the amount of electricity purchased from that supplier. This data is accumulated over a fixed period or interval, for example, monthly, by the retail service provider 46 for all of its point-of-sale units 40, 40A, 40B, 40C and sent to the central collection unit 50 via connection 52.

In the central collection unit 50, the data relating the transaction-specific electricity suppliers and the amount of electricity purchased from each supplier is correlated at predetermined intervals, for example, monthly, so that the amount of electricity supplied by each of the individual electricity suppliers can be calculated and forwarded to the electricity suppliers 54, 56, 58 via connections 60, 62, 64. The central collection unit 50 determines the total amount of electricity purchased during a month, say, and apportions the total among the electricity suppliers 54, 56, 58. Although three electricity suppliers are shown, it will readily be understood that more electricity suppliers could be included in the PAYG system of the present invention.

In accordance with the present invention, a consumer may change his electricity supplier any time he purchases electricity under a PAYG scheme. The electricity may be purchased for immediate use or for further use. Each electricity supplier may provide electricity at a different price to the other suppliers, and may provide 'special offers'.

As described above, a transaction-specific supplier ID is created on a per-transaction basis, and this data becomes part of the 'token' issued to the consumer as described above. The issuer-ID field in this case relates to the retail service provider 46 and not to the electricity supplier. This allows the consumer to decide who his electricity supplier will be every time he makes a purchase. He simply nominates his chosen electricity supplier at the same time as he says how much he wants to buy. He may thus change his supplier, in the extreme, several times a day if he wanted to. The retailer having the point-of-sale unit 40 will, as usual, have interest only in the issuer-ID field so he will return all transactions to the retail service provider 46. The retail service provider 46 accumulates all the data and passes it to the central collection unit 50. Here, the central collection unit 50 is acting on behalf of a group of electricity suppliers 54, 56, 58, and the data collection unit 50 will therefore sort the transactions and clear the cash and system data on their behalf as described above.

Naturally, it will be appreciated that the PAYG system of the present invention is not limited to the purchase of electricity in a retailing outlet. It is envisaged that a consumer may purchase electricity from a machine located external to a retailing outlet, which could include the customer's home or block of apartments, and which includes means for selecting the electricity supplier from which the consumer wishes to purchase his electricity.

It will be appreciated that the connections 48, 52, 60, 62, 64 between the point-of-sale unit 40 and the retail service provider 46, between the retail service provider 46 and the data collection unit 50, and between the data collection unit 50 and the electricity suppliers 54, 56, 58 respectively may comprise communications links, for example, radio, telephone or internet links.

## Claims

1. A system for supplying a commodity to a consumer from a plurality of commodity suppliers, the system comprising:-
selection means for selecting a transaction-specific commodity supplier;
purchasing means associated with the selection means and through which one or more tokens can be purchased from the transaction-specific commodity supplier, the purchasing means including means for recording data relating to the transaction-specific commodity supplier and the amount of the commodity purchased on each token and storing a record thereof;
a meter for connecting the consumer to the commodity; and
input means associated with the meter for inputting 'credit' thereto, the input means being capable of determining the amount of 'credit' from data on the token.

2. A system according to claim 1, further comprising collection means for receiving the stored record from the purchasing means and for effecting payment to the plurality of commodity suppliers in accordance therewith.

3. A system according to claim 2, wherein the collection means includes means for accumulating the stored records for a predetermined interval prior to effecting payment to the commodity suppliers.

4. A system according to any one of the preceding claims, wherein the purchasing means comprises a point-of-sale unit located in one of a retailing outlet, a consumer's home or block of flats.

5. A system according to any one of the preceding claims, wherein the selection means comprises a data entry unit.

6. A system according to any one of the preceding claims, wherein the token comprises a magnetic stripe card and the input means comprises a card reader.

7. A system according to any one of claims 1 to 5, wherein the token comprises a 'smart' card and the input means comprises a 'smart' card reader.

8. A system according to any one of claims 1 to 5, wherein the token comprises a coded receipt.

9. A system according to claim 8, wherein the input means comprises a data entry keypad.

10. A system according to claim 8, wherein the purchasing means includes transmitter means and the input means includes receiver means, the transmitter means being operable for transmitting a signal corresponding to the coded receipt to the receiver means.

11. A system wherein the token comprises a virtual token.

12. A system according to any one of the preceding claims, wherein the purchasing means and the selection means comprises an integral unit.

13. A system according to any one of the preceding claims, wherein the system includes a plurality of purchasing means and associated selection means.

14. A system according to any one of the preceding claims, wherein the meter and its associated input means comprises an integral unit.

15. A system according to any one of the preceding claims, wherein the system includes a plurality of meters and associated input means, each meter and associated input means being allocated to a consumer.

16. A system according to any one of the preceding claims, wherein the commodity is selected from the group including electricity, water and gas.

17. A method of supplying a commodity to a consumer from a plurality of commodity suppliers,
the method comprising:
enabling the selection of a transaction-specific commodity supplier, via selection means, enabling the purchase of an amount of the commodity via purchasing means associated with the selection means;
whereby one or more tokens are purchased from the transaction-specific commodity supplier, the purchasing means including means for recording data relating to the transaction-specific commodity supplier and the amount purchased, feeding tokens at input means associated with a meter whereby the meter is credited with an amount of commodity and metering the use of the credit such that an amount of commodity maybe dispensed relative to the value of the credit.
